# EUROPEAN PATENT SPECIFICATION

(11) **EP 1 943 021 B1**
(45) Date of publication and mention of the grant of the patent: **20.05.2015**
(21) Application number: 06794116.1
(22) Date of filing: 18.09.2006
(51) Int. Cl.: B02C 18/14, B02C 18/18, B29L 30/00, B29B 17/04, B29B 17/00

(54) **CRUSHING DEVICE AND A ROTOR FOR A CRUSHING DEVICE**
BRECHVORRICHTUNG UND ROTOR FÜR EINE BRECHVORRICHTUNG
DISPOSITIF DE BROYAGE ET ROTOR POUR DISPOSITIF DE BROYAGE

(30) Priority: 19.09.2005 FI 20055499
(43) Date of publication of application: 16.07.2008
(73) Proprietor: Tana Oy, 40801 Vaajakoski (FI)
(72) Inventor: KINNUNEN, Kauko, FI-40520 Jyväskylä (FI)
(74) Representative: Helke, Kimmo Kalervo
(86) International application number: PCT/FI2006/050399
(87) International publication number: WO 2007/034038

(56) References cited:
- EP-A1- 1 210 980
- WO-A1-96/24436
- DE-A1- 19 934 019
- DE-U1- 9 307 422
- DE-U1- 29 714 575
- GB-A- 708 109
- US-A- 4 739 939
- US-A- 5 148 995
- US-A- 5 297 935
- US-A- 5 402 948
- US-A1- 2004 124 691

## Description

The present invention relates to a crushing device, which is intended for crushing material, and which includes
- a frame structure and at least one cylindrical rotor fitted rotatably in it, and
- shredder elements, which are arranged to form differently-handed spiral formations on the circumference of the rotor, the helix angle of the spiral formations being 10° - 50°, preferably 20° - 45°,
the material fed to which crushing device is arranged to travel through the shredder elements, at the same time being crushed into smaller parts as the rotor rotates. The invention also relates to a rotor for a crushing device. An example is disclosed in DE 199 34 019.

The crushing device such as a shredder, is used, for example, for crushing municipal waste or car tyres. In a shredder, there is at lest one slowly rotating rotor, in which there are shredder elements for creating a crushing effect. The material is usually fed to the shredder from above and the crushed material falls beneath the shredder by gravity. In addition, in the rotor there are numerous shedder elements, which are arranged to form a spiral formation on the circumference of the cylindrical rotor. When the rotor rotates, the spiral formation moves the material in the direction of the rise of the spiral. In practice, material that has not yer been crushed then becomes packed between one end of the rotor and the frame structure of the crusher. This weakens the crushing power and can damage not only the rotor, but also the frame structure. In addition, the axial load caused by the packing strains the bearings and its seals.

European patent number 0620762 discloses a device intended for cutting up wood. In it, triangular shredder elements are fitted to the circumference of a smooth cylindrical rotor. The shredder elements are arranged in a line on the circumference of the rotor, in such a way that the shredder elements form spiral formations. In a disclosed application, the spiral formations are differently handed. Thus the shredder elements of the various spiral formations meet the counter blade at different times and at different locations in the longitudinal direction of the rotor.

In the above disclosed device, the shredder elements are far from each other, so that the material being crushed can escape between the shredder elements. In addition, the rotor in question makes hundreds, and even thousands of rotations a minute while simultaneously several shredder elements strike the material. On the other hand, the spiral formations only cause the material to move slightly, due to spiral formations only having a small rise and crossing over each other. However, the placing of the shredder elements causes a periodic loading, which varies in its position, to act on the rotor. This stresses the device and especially its transmission and the rotor bearings. In addition, the shredder elements described are unsuitable for crushing material of a random or tough nature. In other ways too the known crushing devices are only suitable for specific kinds of material. The publication in question indeed concentrates on the triangular reversible blades that form the shredder elements, and their attachment. In addition, the gap between the reversible blades and their counter blades is small, so that the reversible blades cut instead of shredding.

The invention is intended to create a new type of crushing device and a rotor for a crushing device, by means of which the drawbacks of the prior art can be avoided. The characteristic features of the crushing device according to the present invention are stated in the accompanying Claim 1. Correspondingly, the characteristic features of the rotor according to the invention are stated in the accompanying Claim 11. In the rotor cover up to the invention there are shredder elements arranged in a new and surprising manner to create a spiral formation, thus avoiding, for example, packing of the material at the rotor ends. The transfer effect of the spiral formations is indeed fully exploited, with no attempt to cushion it. At the same time, the shredder elements are located on the circumference of the rotor, in an advantageous manner, so that the power of the crushing device is increased compared to that of known crushing devices. Fewer and smaller detrimental stresses than previously act on the rotor and the entire crushing device. In practice the operation of the crushing device is more even than previously and the power produced by the crushing device can be utilized more effectively than previously.

In the following, the invention is examined in detail with reference to the accompanying drawings showing some applications of the invention, in which
- Figure 1a: shows an axonometric view of the crushing device according to the invention,
- Figure 1b: shows a view from one side of the rotor according to the invention,
- Figure 1c: shows a view from the other side of the rotor according to the invention,
- Figure 2a: shows an axonometric view of the rotor according to the invention,
- Figure 2b: shows the rotor of Figure 2a, after it has been rotated about half a rotation counterclockwise,
- Figure 2c: shows the rotor of Figure 2b, after it has been rotated about 30° clockwise,
- Figure 3: shows a plane projection of the rotor according to the invention, equipped with lines showing the helixes of the spiral formations,
- Figure 4: shows a mobile version of the crushing device according to the invention, seen in its operating position in a side view,
- Figure 5a: shows an axonometric view of a second application of the rotor according to the invention,
- Figure 5b: shows a cross-sectional view, seen from the right-hand end, before the first shredder element of the rotor of Figure 5a.

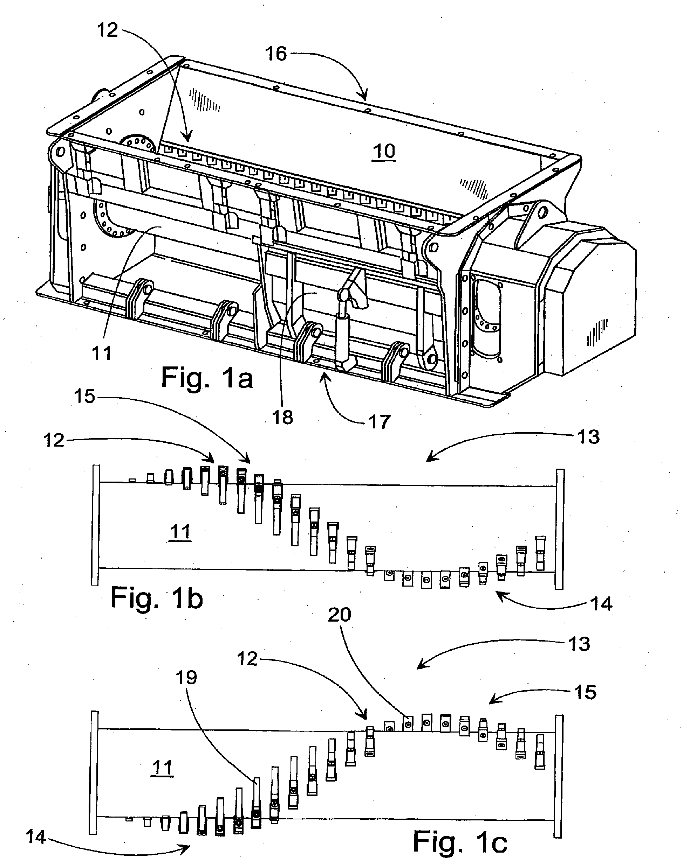

Figure 1a shows the frame structure 10 of the crushing device according to the invention, without auxiliary devices. Hereinafter, the crushing device will be referred to more simply as the shredder. The shredder is intended to crush many different kinds of material and includes at least one cylindrical rotor 11, installed in the frame structure 10 and arranged to rotate. The frame structure 10 is mainly made from steel tubing and plates, and is open only on the top and bottom sides. The frame structure 10 also includes attachment flanges 16 and 17 at both top and bottom part, for fitting the shredder as part of a larger apparatus. In practice, a feed hopper is attached to the top part and an exit hopper correspondingly to the bottom part (not shown). In addition to various hoppers and possible conveyors, the shredder includes a control system and a power source, which is connected to the rotor. Depending on the application, the shredder can be stationary or mobile.

The shredder also includes a rotor 11, which is mounted rotatably at its ends in bearings in the frame structure 10. In addition, in the shredder there are numerous shredder elements 12, which are arranged in connection with both the frame structure 10 and the rotor 11 (Figures 1a and 1b). The shredder elements fitted to the frame structure remain stationary, to act as counter blades. The power source used can be selected case-specifically, but the rotor is preferably rotated by a hydraulic motor. In that case, a diesel engine, for example, drives a hydraulic pump, which rotates the hydraulic motor. In practice, the material fed to the shredder travels through the shredder elements and is simultaneously crushed into smaller parts as the rotor rotates.

Figure 1a also shows a hatch system 18 forming the side wall of the frame structure, which is attached to the frame structure 10 by pivoted joints. The hatch structure 18 can be opened and closed by hydraulic cylinders and is locked by hydraulically operated locking pins. The shredder of Figure 1a includes two parallel hatch structures 18, one of which has been removed in the figure to reveal the rotor 11. By arranging the counter blades in the hatch structure, they can be easily services or changed when the hatch structure is open. The particle size of the crushed material can also be adjusted by adjusting the number of the detachable counter blades.

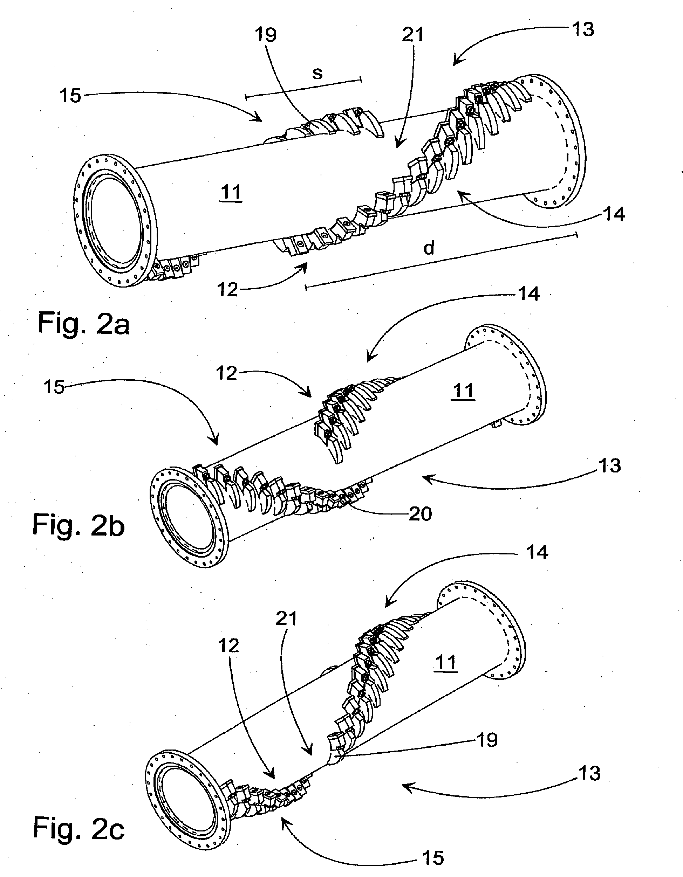

The cylindrical rotor 11 is preferably manufactured from a tubular material and shredder elements 12 are arranged on its circumference to form differently handed spiral formations 13. According to the invention, each spiral formation 13 extends from the end of the rotor 11 for partial length d along the rotor 11 (Figure 2a). In other words, each spiral formation covers only part of the length of the rotor. In addition, the spiral formations 13 are arranged to partly overlap each other, the helix angle γ of the spiral formations 13 being 10° - 50°, preferably 20° - 45°. The relatively gentle spiral formation creates an advantageous movement of the material and an advantageous placing of the shredder elements. In addition to this, thanks to the partly overlapping spiral formations, there are more shredder elements in the middle part of the rotor than at its ends. In practice, the material thus spreads more evenly over the entire length of the rotor, which further increases the power of the shredder. At the same time, the rotor and its transmission are loaded more evenly than before.

The aforementioned partial length d is preferably 60 - 85 % of the length of the rotor. In practice, the spiral formations are arranged in such a way that they end before they intersect each other. The same principle is also followed by the rise of the spiral formations, which according to the invention is 0,5 - 0,8-times the length of the rotor. In practice, there are shredder elements continuously at even intervals over the entire circumference of the rotor. In practice, according to the invention, at any one time there is only one shredder element striking the material. Thus the available power can be directed as effectively as possible at crushing. At the same time, the rotor is loaded evenly and its operation is even. Due to the construction of the spiral formation and their mutual positioning, the shredder elements strike the material more frequently in the centre of the middle of the rotor than at its ends. Thus the crushing of the material is made even more efficient. The differently-handed spiral formations also move the material towards the middle of the rotor, so that the material tends to concentrate in the location where the crushing is most effective. In the rotors shown, one of the shredder elements at the ends may coincide with a shredder element in the middle. However this has very little effect on the power requirement, or inversely on the crushing effect, as relatively less material for crushing travels to the shredder elements at the ends.

Figures 1b and 1c show one application of the placing of the shredder elements. Blade saddles 19, to which blade pieces 20 are detachably secured, are welded at regular intervals to the outer surface of the smooth, cylindrical rotor. The size, shape, and position of the blade piece can be altered to change the properties of the shredder, such as the particle size created. Generally however, in each spiral formation the shredder elements are arranged in the axial direction of the rotor, the distance between adjacent shredder elements being essentially equal to the width of the shredder element in the axial direction of the rotor. In other words, the adjacent shredder elements are relatively close to each other. Thus, consecutive impacts, the location of which in the longitudinal direction of the rotor simultaneously changes, act on the material. In addition, the travelling of the material between the shredder elements is avoided. In other words, escaping of the material is prevented. The number of shredder elements in the shredder naturally varies according to the size of the rotor. Generally however, in each spiral formation there are 5 - 15, preferably 6 - 10 shredder elements to each metre of length of the rotor. Thus the shredder elements strike the material at close intervals, which evens the loading of the rotor.

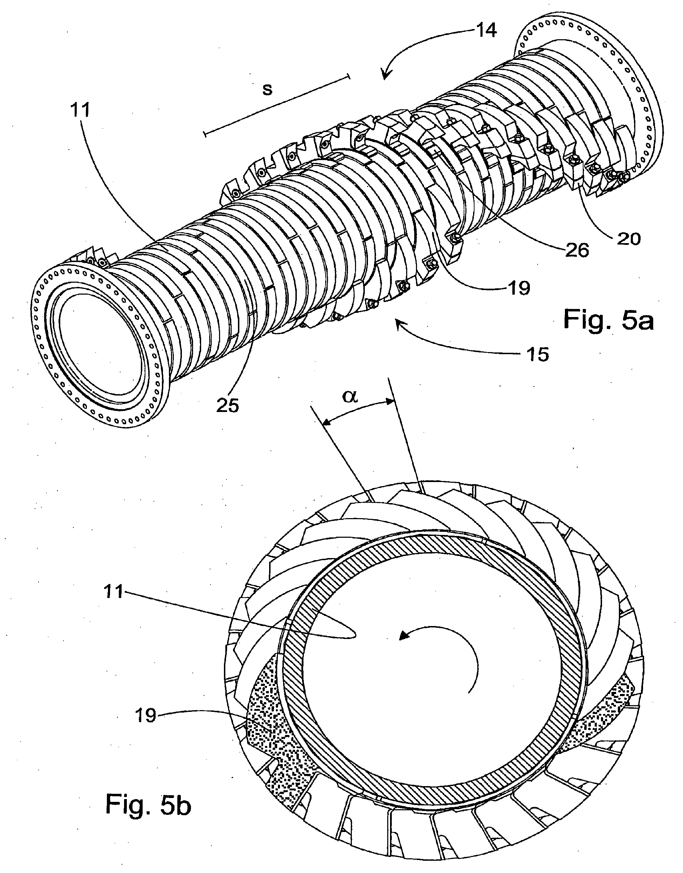

According to the invention, the spiral formations 13 are surprisingly arranged to form two separate spirals 14 and 15. In addition, the first 14 of these spirals is left-handed and the second 15 is right-handed. Thus the shredder elements are distributed evenly around the entire circumference of the rotor. In addition, the separate spirals operate without interfering with each other. The differently handed spirals 14 and 15 are also arranged in such a way that their rise is towards the middle of the rotor 11 (Figures 2a - 2c and 5a). Thus the material tends to move towards the middle of the rotor, where most of the shredder elements are. At the same time, the spirals move the unshredded material in different directions, which reduces packing. In addition, the packing problem at the ends of the rotor, which appeared previously can be avoided. The direction of rotation of the rotor is also taken into account when defining the handedness. The rotor shown in the figures rotates in one direction, so that the handedness of the spirals is selected in such a way that the material moves towards the middle of the rotor when the rotor is rotated. On the other hand, the rotor can also be rotated in the other direction. This is advantageous, particularly in possible cases of blockage, in which the rotor is rotated backwards. The spirals then move the material towards the end of the rotor, so that the blockage is spread out.

According to the invention, the dimensions of the spirals are essentially the same, except for their handedness. Thus the shredder is loaded evenly. In addition, the spirals are unbroken. In other words, the shredder elements are so close to each other that the material is prevented from travelling between them. At the same time, the transfer effect of the spiral is powerful. On the other hand, one spiral clearly ends before the other spiral. Thus a passage 21 remains between the spirals 14 and 15, so that material for crushing travels to each shredder element 12. The passage also assists in movement of large, especially sheet-like pieces to a shredder element. When the spiral ends, the material immediately comes under the influence of the next spiral and starts moving in the other direction. Thus particularly in the middle of the rotor the material travels backwards and forwards, while simultaneously being effectively shredded. Operation of this kind is achieved by arranging the spirals 14 and 15 t overlap each other by the distance s in the axial direction of the rotor 11, which is 10 - 50 %, preferably 20 - 40 % of the length of the rotor 11 (Figures 2a and 5a). Further, the spirals 14 and 15 in the rotor are arranged to start at different ends of the rotor on opposite sides of the rotor 11. More specifically, in the rotor according to the invention there are two spirals starting at opposite ends of the rotor and running to different directions around it with a phase difference of 180 degrees. Thus the shredder elements are divided in such a way that a suitable number of shredder elements meet the material simultaneously. In practice however, the aim is for only one shredder element to work at one time.

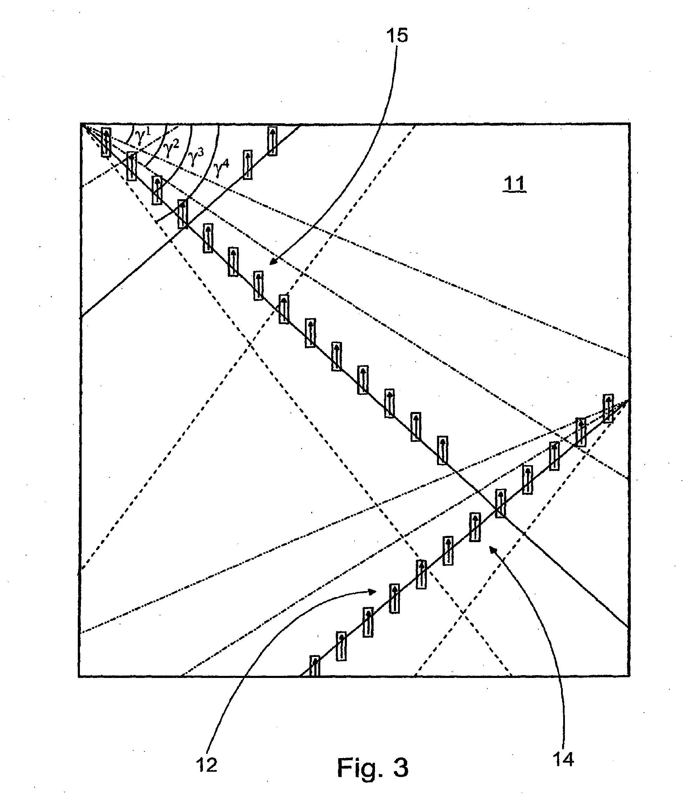

Figure 3 shows a surface projection of the jacket of the rotor according to the invention. The end parts of the rotor are at the left and right-hand sides of Figure 3. The figure shows the lines of four different helixes of the spiral formations. According to the invention, the spirals 14 and 15 start at different sides at the opposite ends of the rotor 11 and are differently handed. The gentlest helix of Figure 3 is shown with a line of dashes and double dots and has a helix angle γ¹ of 25°. The following line of dashes and single dots shows a helix with a helix angle γ² of 35°. The helix angle γ³ shown by the solid line is 45°, and the helix angle γ⁴ shown by the broken line is 55°. Figure 3 also shows schematically the location of the shredder elements. The arrows show the direction of rotation of the rotor 11.

The features described above are particularly advantageous in a crushing device that includes only one rotor. On the other hand, it is possible to make, for example, a twin-rotor shredder, in which the rotors are rotated in opposite directions towards each other. In that case, the counter blades will be between the rotors. In the application in question, the handedness of the rotor helixes are opposite, relative to each other. Thus the material will move towards the centre of the rotors, just as it does in a single-rotor shredder. In addition, a crushing device can easily be made, in which there are two of the rotor pairs described above next to each other. In that case, adequate space for the material being crushed will be provided in all directions in the crushing device.

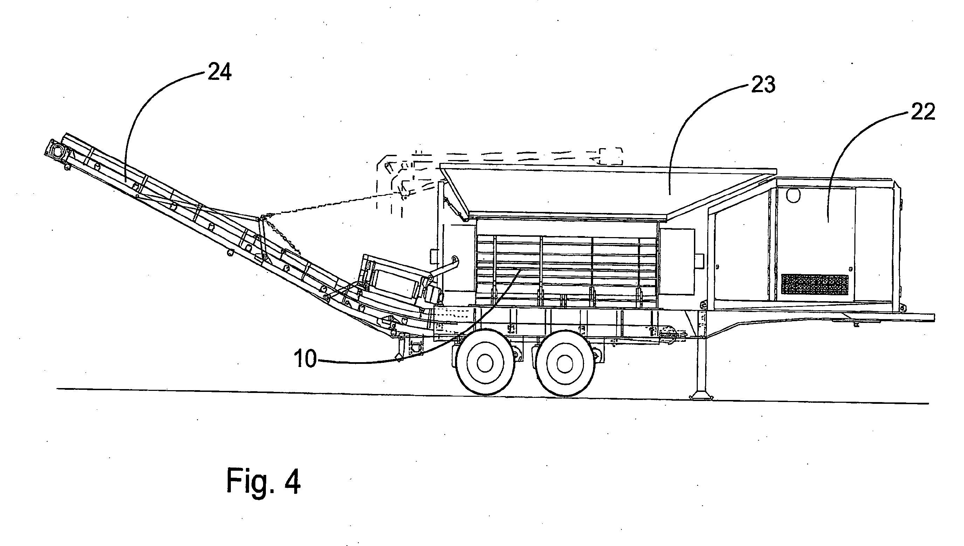

Rotors according to the invention, in which each spiral formation extends starting from the end of the rotor for part of the length of the rotor, and the spiral formations are arranged to partly overlap each other, the helix angle γ of the spiral formations 13 being 10° - 50°, preferably 20° - 45°, can be used in many different kinds of shredders. Figure 4 shows a mobile version of a shredder according to the invention, in which the frame structure 10 is arranged as part of a truck's semi-trailer. The shredder also includes a diesel engine 22 with its auxiliary devices, so that the shredder forms an independent unit, which can be moved as required using a normal truck. In the transport position, the length of the shredder is about ten metres and its height clearly less than four metres. Thus the compact shredder can be transported even to cramped locations and over long distances, without special arrangements.

In the shredder shown, at both ends of the rotor there is a hydraulic motor equipped with a planet gearbox. The hydraulic motors are driven by two hydraulic pumps, which are arranged as a direct extension of the diesel engine. The adjustability and efficiency of the solution in question are good and the shredder is made compact. In such a shredder, the speed of rotation of the rotor is generally less than 30 revolutions per minute. In practice, the speed of revolution varies and has a maximum in the range 10 - 30 revolutions per minute. Despite this, the output of the shredder consists of several tens of tonnes an hour, depending on the particles size and manner of feed.

In the application of Figure 4, a feed hopper 23, into which the material for crushing is fed, for example, by a bucket loader or feeder, is fitted on top of the frame structure 10. In this case, underneath the frame structure 10 there is a belt conveyor 24, which moves the crushed material away from the vicinity of the shredder. In the application shown, the length of the rotor is about three metres and its diameter, including the shredder elements, is about one metre.

Figure 5a shows another application of the rotor according to the invention. In this case too, the operating and dimensioning principles are as above, but particularly the structure of the shredder elements 12 and the structure of the rotor have been reinforced. Thus the rotor is even more durable and can be used to shred even materials that cause wear. Firstly, the thickness of the material of the rotor tube has been increased and wear collars 25 have been welded to the gaps between the shredder elements. This avoids wear of the rotor tube. In addition, the blade saddle 19 belonging to the shredder element 12 is elongated and extends in front of the blade piece 20. This permits the blade saddle to be welded to the rotor tube over a long distance. In addition, in front of the blade saddle 19 before the blade piece 20 there is a wear stud 26, which also strikes the material when it is being crushed. Figure 5b shows the rotor without the blade pieces. In the rotors of Figures 5a and 5b, in each of the spirals 14 and 15 there are fifteen 60-mm wide blade pieces 20, the distance between which in this case is 60 mm. In addition, the spirals 14 and 15 overlap over the distance of six blade pieces 20. The same reference numbers are used for components that are functionally similar.

Figure 5b shows one spiral 14 with the first and last blade saddles 19 shaded. In addition, according to the invention, the shredder elements are arranged in stages on the circumference of the rotor. According to the invention, in each spiral 14 and 15, a stage angle α, which is 12° - 20°, preferably 15° - 17°, is arranged between adjacent shredder elements 12. Thus the material passes sufficiently between the shredder element and the counter blade, while the shredding nevertheless remains uninterrupted. Too small a stage angle would often prevent inhomogeneous material from travelling to the shredder element. On the other hand, too great a stage angle would make the work strokes excessively infrequent and the formation of the spirals would be hindered considerably.

The use of the rotor according to the invention achieves an effective crushing effect without packing problems. The rotor can be applied in various kinds of shredder. According to tests, the spiral arrangement according to the invention is suited surprisingly well to the crushing of various kinds of material. Blockages are rare, and particularly in the middle of the rotor, thanks to the spirals the material moves in the longitudinal direction of the rotor and thus spreads evenly to be crushed by the shredder elements. At the same time, packing of the material at the ends of the rotor is avoided. By means of the dimensioning and placing of the shredder elements, a rotor is created, which suitable for different kinds of, and even very hard or tough materials.

## Claims

1. Crushing device, which is intended for crushing material, and which includes
- a frame structure (10) and at least one cylindrical rotor (11) fitted rotatably in it, and
- shredder elements (12), which are arranged to form differently-handed spiral formations (13) on the circumference of the rotor (11), the helix angle (γ) of the spiral formations (13) being 10° - 50°, preferably 20° - 45°,
the material fed to which crushing device being arranged to travel through the shredder elements (12), at the same time being crushed into smaller parts as the rotor (11) rotates, **characterized in that** the rotor (11) includes two separate spiral formations (13), which are arranged to form two separate spirals (14, 15), the first (14) of which spirals is left-handed and the second (15) spiral is right-handed, and the spirals (14, 15) are arranged to start at opposite ends of the rotor (11) from opposite sides, each of which spiral formations (13) extends from the end of the rotor (11) for partial length (d) of the rotor (11), and the spiral formations (13) are arranged to partly overlap each other in such way that there is a passage (21) between the spiral formations (13).

2. Crushing device according to Claim 1, **characterized in that** the partial length (d) is 60 - 85 % of the length of the rotor (11).

3. Crushing device according to Claim 1 or 2, **characterized in that** the helix of the spiral formation (13) is 0,5 - 0,8-times the length of the rotor (11).

4. Crushing device according to any of Claims 1 - 3, **characterized in that** in each spiral formation (13) the shredder elements (12) are arranged adjacent in the axial direction of the rotor (11), the distance between the shredder elements (12) being essentially equal to the width of the shredder element in the axial direction of the rotor (11).

5. Crushing device according to any of Claims 1 - 4, **characterized in that** in each spiral formation (13) there are 5 - 15, preferably 6 - 10 shredder elements (12) to each metre of length of the rotor (11).

6. Crushing device according to Claim 1, **characterized in that** the spirals (14, 15) are arranged in such a way that helix rises towards the centre of the rotor (11).

7. Crushing device according to Claim 1 or 6, **characterized in that** the spirals (14, 15) have essentially the same dimensions, except for their handedness.

8. Crushing device according to any of Claims 1, 6 - 7, **characterized in that** the spirals (14, 15) are unbroken and are arranged to overlap each other for the distance s in the axial direction of the rotor (11), which is 10 - 50 %, preferably 20 - 40 % of the length of the rotor (11).

9. Crushing device according to any of Claims 1, 6 - 8, **characterized in that** in each spiral (14, 15), a stage angle α, which is 12° - 20°, preferably 15° - 17°, is arranged between adjacent shredder elements (12).

10. Crushing device according to Claims 1 - 9, **characterized in that** the crushing device includes one rotor (11).

11. Rotor for a crushing device, on the circumference of which cylindrical rotor (11) shredder elements (12) are arranged to form differently-handed spiral formations (13), and the helix angle (γ) of the spiral formations (13) being 10° - 50°, preferably 20° - 45°, **characterized in that** the rotor (11) includes two separate spiral formations (13), which are arranged to form two separate spirals (14, 15), the first (14) of which spirals is left-handed and the second (15) spiral is right-handed, and the spirals (14, 15) are arranged to start at opposite ends of the rotor (11) from opposite sides, each of which spiral formations (13) extends from the end of the rotor (11) for partial length (d) of the of the rotor (11), and the spiral formations (13) are arranged to partly overlap each other in such way that there is a passage (21) between the spiral formations (13).

12. Rotor according to Claim 11, **characterized in that** the spiral formations (13) of the rotor (11) are according to any of Claims 2 - 10.

## Patentansprüche

1. Eine Zerkleinerungsvorrichtung, deren Zweck das Zerkleinern von Material ist, zu der gehören:
- eine Rahmenkonstruktion (10), in der sich zumindest ein drehbar angeordneter zylinderförmiger Rotor (11) befindet, und
- Messerelemente (12), die spiralförmig (13) auf dem Mantel des Rotors (11) in gegenläufiger Ausrichtung angeordnet sind und deren Spiralformationen (13) einen Steigungswinkel (γ) von 10° - 50°, vorzugsweise 20° - 45°, aufweisen,
das in die Zerkleinerungsvorrichtung zugeführte Material wird über die Messerelemente (12) geführt und gleichzeitig durch den sich drehenden Rotor (11) in kleine Teile zerkleinert, **dadurch gekennzeichnet, dass** zum Rotor (11) zwei separate Spiralformationen (13) gehören, die (13) als zwei separate Spiralen (14, 15) angeordnet sind, wobei die eine Spirale (14) linkshändig und die andere Spirale (15) rechtshändig sind und die Spiralen (14, 15) so angeordnet sind, dass sie an den entgegengesetzten Enden des Rotors (11) auf entgegengesetzter Seite beginnen und jede der Spiralformationen (13) vom Ende des Rotors (11) beginnend über eine Teilstrecke (d) reicht, und die Spiralformationen (13) sind teilweise überlappend im Verhältnis zueinander so angeordnet, dass zwischen den Spiralformationen (13) eine Passage (21) liegt.

2. Zerkleinerungsvorrichtung gemäß dem Patentanspruch 1, **dadurch gekennzeichnet, dass** die Teilstrecke (d) 60 - 85 % der Länge des Rotors (11) entspricht.

3. Zerkleinerungsvorrichtung gemäß dem Patentanspruch 1 oder 2, **dadurch gekennzeichnet, dass** die Spirale der Spiralformation (13) dem 0,5 - 0,8-fachen der Länge des Rotors (11) entspricht.

4. Zerkleinerungsvorrichtung gemäß einem der Patentansprüche 1 - 3, **dadurch gekennzeichnet, dass** in jeder Spiralformation (13) nebeneinander Messerelemente (12) in Axialrichtung des Rotors (11) angeordnet sind, der Abstand zwischen den Messerelementen (12) wesentlich genauso groß wie die Breite eines Messerelements in Axialrichtung des Rotors (11) ist.

5. Zerkleinerungsvorrichtung gemäß einem der Patentansprüche 1 - 4, **dadurch gekennzeichnet, dass** in jeder Spiralformation (13) 5 - 15, vorzugsweise 6 - 10 Messerelemente (12) pro Längenmeter des Rotors (11) angebracht sind.

6. Zerkleinerungsvorrichtung gemäß dem Patentanspruch 1, **dadurch gekennzeichnet, dass** die Spiralen (14, 15) so angeordnet sind, dass ihr Anstieg zum Mittelteil des Rotors (11) hin zunimmt.

7. Zerkleinerungsvorrichtung gemäß dem Patentanspruch 1 oder 6, **dadurch gekennzeichnet, dass** die Spiralen (14, 15) hinsichtlich ihrer Abmessungen wesentlich gleich sind, außer hinsichtlich ihrer Händigkeit.

8. Zerkleinerungsvorrichtung gemäß einem der Patentansprüche 1, 6 - 7, **dadurch gekennzeichnet, dass** die Spiralen (14, 15) ununterbrochen und so angeordnet sind, dass sie sich gegenseitig im Verhältnis zueinander in Axialrichtung des Rotors (11) auf der Strecke s überlappen, die 10 - 50 %, vorzugsweise 20 - 40 % der Länge des Rotors (11) entspricht.

9. Zerkleinerungsvorrichtung gemäß einem der Patentansprüche 1, 6 - 8, **dadurch gekennzeichnet, dass** in jeder der Spiralen (14, 15) zwischen den nebeneinander liegenden Messerelementen (12) ein Phasenwinkel α angeordnet ist, der 12° - 20°, vorzugsweise 15° - 17° beträgt.

10. Zerkleinerungsvorrichtung gemäß der Patentansprüche 1 - 9, **dadurch gekennzeichnet, dass** zur Zerkleinerungsvorrichtung ein Rotor (11) gehört.

11. Rotor für eine Zerkleinerungsvorrichtung, auf dessen Mantel des zylinderförmigen Rotors (11) gegenläufig als Spiralformation (13) Messerelemente (12) angeordnet sind, und der Steigungswinkel (γ) der Spiralformationen (13) 10° - 50°, vorzugsweise 20° - 45° beträgt, **dadurch gekennzeichnet, dass** zum Rotor (11) zwei separate Spiralformationen (13) gehören, die als zwei separate Spiralen (14, 15) angeordnet sind, wobei die eine Spirale (14) linkshändig und die andere Spirale (15) rechtshändig sind und die Spiralen (14, 15) so angeordnet sind, dass sie an den entgegengesetzten Enden des Rotors (11) auf entgegengesetzter Seite beginnen und jede der Spiralformationen (13) vom Ende des Rotors (11) beginnend über eine Teilstrecke (d) reicht, und die Spiralformationen (13) sind teilweise überlappend im Verhältnis zueinander so angeordnet, dass zwischen den Spiralformationen (13) eine Passage (21) liegt.

12. Rotor gemäß dem Patentanspruch 11, **dadurch gekennzeichnet, dass** die Spiralformationen (13) des Rotors (11) gemäß einem der Patentansprüche 2 - 10 entsprechen.

## Revendications

1. Dispositif de broyage, prévu pour broyer des matériaux, et qui comprend
- un cadre (10) et au moins un rotor (11) cylindrique relié de manière rotative à celui-ci, et
- des éléments déchiqueteurs (12), qui sont disposés de sorte à former des formations en spirale (13) ayant des sens de rotation différents sur la circonférence du rotor (11), l'angle d'hélice (γ) des formations en spirale (13) étant de 10° à 50°, de préférence de 20° à 45°,
la matière qui entre dans lequel dispositif de broyage étant disposée de sorte qu'elle passe par les éléments déchiqueteurs (12), tout en étant coupée en plus petits morceaux pendant que le rotor (11) tourne, **caractérisé en ce que** le rotor (11) comprend deux formations en spirale (13) séparées, qui sont disposées de sorte à former deux spirales (14, 15) séparées, la première (14) desquelles spirales tourne dans le sens anti-horaire et la seconde (15) spirale tourne dans le sens horaire, et les spirales (14, 15) sont disposées de sorte à commencer aux extrémités opposées du rotor (11) des côtés opposés, chacune desquelles formations en spirale (13) s'étend de l'extrémité du rotor (11) jusqu'à une longueur partielle (d) du rotor (11), et les formations en spirale (13) sont disposées de sorte à se chevaucher partiellement de sorte qu'il y a un passage (21) entre les formations en spirale (13).

2. Dispositif de broyage selon la revendication 1, **caractérisé en ce que** la longueur partielle (d) est de 60 à 85 % de la longueur du rotor (11).

3. Dispositif de broyage selon la revendication 1 ou 2, **caractérisé en ce que** l'hélice de la formation en spirale (13) est de 0,5 à 0,8 fois la longueur du rotor (11).

4. Dispositif de broyage selon l'une quelconque des revendications 1 à 3, **caractérisé en ce que** dans chaque formation en spirale (13), les éléments déchiqueteurs (12) sont disposés côte à côte dans la direction axiale du rotor (11), la distance entre les éléments déchiqueteurs (12) étant essentiellement égale à la largeur de l'élément déchiqueteur dans la direction axiale du rotor (11).

5. Dispositif de broyage selon l'une quelconque des revendications 1 à 4, **caractérisé en ce que** dans chaque formation en spirale (13), il y a 5 à 15, de préférence 6 à 10, éléments déchiqueteurs (12) pour chaque mètre de la longueur du rotor (11).

6. Dispositif de broyage selon la revendication 1, **caractérisé en ce que** les spirales (14, 15) sont disposées de sorte que l'hélice s'élève vers le milieu du rotor (11).

7. Dispositif de broyage selon la revendication 1 ou 6, **caractérisé en ce que** les spirales (14, 15) ont essentiellement les mêmes dimensions, à l'exception du sens de rotation.

8. Dispositif de broyage selon l'une quelconque des revendications 1, 6 à 7, **caractérisé en ce que** les spirales (14, 15) sont ininterrompues et disposées de sorte à se chevaucher dans la direction axiale du rotor (11) sur une distance s qui est de 10 à 50 %, de préférence de 20 à 40 % de la longueur du rotor (11).

9. Dispositif de broyage selon l'une quelconque des revendications 1, 6 à 8, **caractérisé en ce que** dans chaque spirale (14, 15), un angle de phase α, qui est de 12° à 20°, de préférence de 15° à 17°, est disposé entre les éléments déchiqueteurs (12) adjacents.

10. Dispositif de broyage selon les revendications 1 à 9, **caractérisé en ce que** le dispositif de broyage comprend un rotor (11).

11. Rotor pour un dispositif de broyage, sur la circonférence duquel rotor (11) cylindrique des éléments déchiqueteurs (12) sont disposés de sorte à former des formations en spirale (13) ayant des sens de rotation différents, et l'angle d'hélice (γ) des formations en spirale (13) étant de 10° à 50°, de préférence de 20° à 45°, **caractérisé en ce que** le rotor (11) comprend deux formations en spirale (13) séparées, qui sont disposées de sorte à former deux spirales (14, 15) séparées, la première (14) desquelles spirales tourne dans le sens anti-horaire et la seconde (15) spirale tourne dans le sens horaire, et les spirales (14, 15) sont disposées de sorte à commencer aux extrémités opposées du rotor (11) des côtés opposés, chacune desquelles formations spirales (13) s'étend de l'extrémité du rotor (11) sur une longueur partielle (d) du rotor (11), et les formations en spirale (13) sont disposées de sorte à se chevaucher partiellement de sorte qu'il y a un passage (21) entre les formations en spirale (13).

12. Rotor selon la revendication 11, **caractérisé en ce que** les formations en spirale (13) du rotor (11) sont selon l'une quelconque des revendications 2 à 10.
